# EUROPEAN PATENT SPECIFICATION

(11) **EP 1 377 495 B1**
(45) Date of publication and mention of the grant of the patent: **05.01.2011**
(21) Application number: 02723821.1
(22) Date of filing: 11.04.2002
(51) Int. Cl.: B62K 21/12, B62K 19/36, B62K 19/16

(54) **OBJECT CLAMP, SUCH AS FOR BICYCLE COMPONENT, HAVING AT LEAST ONE RELIEF AREA AND RELATED METHODS**
KLEMMSCHELLE, Z.B. FÜR FAHRRADKOMPONENTE MIT MINDESTENS EINEM KONTURBEREICH UND ZUGEHÖRIGEM VERFAHREN
COLLIER DE SERRAGE D'OBJET, PAR EXEMPLE UN COMPOSANT DE BICYCLETTE, PRESENTANT AU MOINS UNE ZONE DE DEGAGEMENT ET PROCEDES ASSOCIES

(30) Priority: 11.04.2001 US 283105 P
(43) Date of publication of application: 07.01.2004
(73) Proprietor: L.H. Thomson Company Inc., Macon, GA 31297-0158 (US)
(72) Inventor: THOMSON, Loronzo, Byron, GA 31008 (US); THOMSON, Brian, Warner Robins, GA 31093 (US)
(74) Representative: Warren, Keith Stanley
(86) International application number: PCT/US2002/011363
(87) International publication number: WO 2002/083488

(56) References cited:
- EP-A- 1 026 410
- DE-A- 19 908 651
- DE-U- 29 809 997
- US-B1- 6 176 640

## Description

The present invention relates to the field of mechanical connectors and clamps and, more particularly, to a clamp for connecting to an object, such as a bicycle component.

A number of applications require connection or clamping to a cylindrical object, such as a tube, rod or shaft, for example. Examples of such are for clamping to the steering tube, bicycle seat tube, or handlebar of a bicycle.

Bicycles are widely used for transportation and recreation. A typical bicycle includes a rear wheel carried by a frame and a front wheel carried by a fork which, in turn, is rotatably connected to a forward portion of the frame. In particular, a steering tube is connected at its lower end to the fork and extends through a corresponding passageway defined in the forward portion of the frame. An upper portion of the steering tube is connected to a bicycle stem.

The bicycle stem includes a steering tube clamp portion which clamps to the upper end of the steering tube. A body portion extends generally forwardly and inclined from the steering tube clamping portion and terminates at a handlebar clamp portion. The incline is generally upward for mountain biking and downward for road biking, as desired by the rider. Of course, the medial portion of the handlebar is connected to the handlebar clamp portion of the stem. The rider is thus able to steer the front wheel by turning the handlebar.

The bicycle stem is important for proper orientation and positioning of the rider relative to the bicycle. In addition, the stem is desirably relatively strong to avoid potentially catastrophic failure, and is also desirably lightweight to reduce the burden on the rider. Mountain or off-road biking can put especially high demands on the strength of the stem. Road bikes may also place high demands in terms of both required strength and being relatively lightweight on the bicycle stem.

The stem also desirably has relatively high torsional stiffness, that is, a resistance to allowing the handlebar to rotate as the rider pushes on one side while lifting on the other. If the torsional stiffness is too low, the rider's energy is more quickly and wastefully depleted in rotating the handlebar.

Bicycle stems can be made of several different materials that are both light in weight and have high strength properties. Recently, and in an effort to use more lightweight materials, bicycle stems and other bicycle components have been manufactured out of composite materials. The clamp used to secure such bicycle components typically includes two cylindrical halves or clamping members which can be urged together by a fastener, such as a bolt, for example, which expends along an axis defined by the cylindrical halves. More particularly, the cylindrical halves each include corresponding arcuate recesses which, when properly aligned, will press against an outer circumferential portion of the steering tube upon tightening of the bolt to thus clamp the bicycle stem to the steering tube. Such stems are shown, for example, in U.S. Patent Nos. 5,687,616 and 5,842,385.

The outermost ends of the clamps may define contact points which bite into the bicycle components, thus forming dimples in bicycle components. These dimples are especially common in bicycle components made of more flexible materials, such as aluminum. Such deformations of the bicycle component may be undesirable for a number of reasons. For example, the deformations are aesthetically displeasing and can sometimes cause the clamp to seat within the dimples. When a clamp seats within the dimples good contact is not made with the bicycle object to be clamped. In cases where composite materials are used to form bicycle components, scoring of the bicycle component occurs when the clamp end portions dig into the bicycle component. This scoring is generally undesirable. Over time, the scoring may lead to more serious damage, such as cracks, which may eventually lead to catastrophic failure. Such composite bicycle components are often used on high-end road bicycles, for example. Of course, these same shortcomings extend to other similar clamping applications.

U.S.-A-. 3,868,193 discloses a clamp having portions with a smaller cross sectional area so as to improve bending flexibility. Therefore, when the clamp is tightened around the object to be clamped, it gives way, or bends. Therefore, it is the clamp that is deformed instead of the object being clamped. Unfortunately, this deformation of the clamp can also eventually lead to catastrophic failure of the clamp. Further, in cases where the object to be clamped is made of very brittle material, such as a composite material, the force necessary to deform or crack the material is not great and therefore any tightening of the clamp that allows for end portions of the clamp to bite into the object can still cause catastrophic failure of the object.

A bicycle stem including a handlebar clamping portion that tightens against a composite handlebar may cause cosmetic damage or scratching of the composite material if the clamp portions deform slightly during tightening of the fasteners. This may occur, for example, when opposing clamping portions are configured to define one or more pairs of opposing ends in a preclamped state. As the fasteners are secured and the opposing ends are drawn toward each other for the clamped state, the clamp portions may deform slightly and dig or bite into the composite material causing scratches or indentations in the surface.

U.S. -A- 6,176,640, for example, discloses an approach to overcome the scratching of a composite steering tube upon clamping. This patent discloses forming flats on the otherwise rounded outer surface of the composite steering tube. Accordingly, the opposing ends of a C-shaped clamp will not contact the steering tube at these flats when in the clamped state. Unfortunately, the overall contact area available for clamping is reduced and careful alignment may be required to ensure that the opposing ends are aligned with a flat.

EP-A-1 026 410 discloses a tubular body having an integral adapter at one end for fastening a tube to the body. The adapter includes a cylindrical clamping section in band form and having two ends at two diametrically opposite positions integral with the tubular body at a transition area between the body and the adapter. The band form adapter is guided over the tube to be fastened to the body, in loop fashion and so that it has two looped free ends which accommodate two pins of a clamping device.

DE-A-19908651 discloses a holder for a medication, cosmetic or sun protection stick comprising a clip for the stick mounted to a clamp for attaching the holder to a tubular member, such as the tube of a bicycle frame. The clamp comprises clamping portions with opposing ends and defining a generally oval clamping opening. Screw fasteners are arranged to draw the opposing ends together until the flat faces of the opposing ends seat against each other, whereby to clamp the holder to a tube.

In view of the foregoing background, it is therefore an object of the present invention to provide an object clamp that reduces a likelihood of damage, such as scratching, during clamping.

From one aspect, the invention resides in an object clamp as set forth in claim 1 hereof. It enables the clamp portions of the clamp securely to engage the object, and with a reduced likelihood of scratching or digging into the object.

The or each relief area of a recess of a clamping portion defines a discontinuity with adjacent portions of the respective recess in the preclamped state. This discontinuity is angularly spaced inward from the adjacent end in a range of about 4 to 60 degrees. The relief axis of a relief area is offset from the main axis of the generally cylindrical clamping opening and the relief radius may be less than or equal to the main radius.

In one class of embodiments, the object clamp can include first and second pairs of opposing ends. These pairs of ends can be separated by about 180 degrees, for example. In another class of embodiments, the object clamp can include a single pair of opposing ends.

The first and second clamp portions can have one or more pairs of aligned fastener receiving passageways therein for receiving respective fasteners. The object clamp can be a bicycle component clamp such as at either end of a bicycle stem, that is, for receiving a bicycle steering tube or a bicycle handlebar. The bicycle component could alternately be for a bicycle seat tube. Other applications for the clamp are also contemplated. The object clamp can further include a body portion connected to at least one of the clamp portions and extending outwardly therefrom.

From another aspect, the invention resides in a method for making the object clamp, as set forth in claim 4.

In order that the present invention may be more readily understood, reference will now be made to the accompanying drawings, in which:-
FIG. 1 is a perspective front view of a first embodiment of a bicycle stem.
FIG. 2 is a left side elevational view of the stem as shown in FIG. 1.
FIG. 3 is a top plan view of the stem as shown in FIG. 1.
FIGS. 4 and 5 are perspective and side elevational views, respectively, of a steering tube clamp in accordance with the prior art.
FIGS. 6 and 7 are perspective and side elevational views, respectively, of an embodiment of a steering tube clamp.
FIGS. 8 and 9 are perspective and side elevational views, respectively, of another embodiment of a steering tube clamp.
FIGS. 10, 11 and 12 are perspective, side and elevational views, respectively, of the steering tube clamp as used in the stem of FIG. 1.
FIG. 13 is an end view of a variation of the steering tube clamp as shown in FIGS. 10-12.
FIGS. 14A and 14B are greatly enlarged longitudinal cross-sectional views of the steering tube clamp as shown in FIGS. 10-12 illustrating the canting angle feature.
FIGS. 15, 16 and 17 are left and right side elevational, and top plan views, respectively, of a portion of the steering tube clamping portion of another embodiment of the bicycle stem
FIG. 18 is a perspective view of an embodiment of a steering tube clamp member to be used in the bicycle stem embodiment shown in FIGS. 15-17.
FIG. 19 is a greatly enlarged cross-sectional view taken through the handlebar clamping portion and handlebar clamping member of the bicycle stem as show in FIG. 1.
FIGS. 20 and 21 are perspective and end views, respectively, of the handlebar clamping portion of the bicycle stem as shown in FIG. 1 with the handlebar clamp removed for clarity.
FIGS. 22 and 23 are top plan and bottom plan views, respectively, of the handlebar clamp member as shown in FIG. 1.
FIGS. 24 and 25 are side and end elevational views, respectively, of the handlebar clamp member as shown in FIG. 1.
FIGS. 26 and 27 are left and ride side elevational views of the steering tube portion of the bicycle stem as shown in FIG. 1 illustrating the maintenance failure indication.
FIG. 28 is a bottom plan view of the bicycle stem as shown in FIGS. 26 and 27.
FIGS. 29 and 30 are side elevational views of a portion of an embodiment of a bicycle stem secured to a handlebar and having relief areas in the outer clamp portion illustrated in a preclamped and a clamped state, respectively, according to the present invention.
FIG. 31 is a side elevational view of the clamp portion with the relief areas therein as shown in FIGS. 29 and 30, and with the handlebar removed for clarity.
FIG. 32 is an enlarged view of the relief area shown in the upper portion of FIG. 31.
FIGS. 33 and 34 are side elevational views of a portion of another embodiment of a bicycle stem secured to a handlebar and having relief areas in the inner clamp portion illustrated in a preclamped and a clamped state, respectively, according to the present invention.
FIG. 35 is side elevational view of yet another bicycle stem embodiment in accordance with the present invention.
FIGS. 36 and 37 are enlarged top plan views of the steering tube clamp of the bicycle stem as shown in FIG. 35 and illustrated in a preclamped and a clamped state, respectively.
FIG. 38 is a side elevation view of a portion of a bicycle including a seat tube clamp with relief areas in accordance with the present invention.
FIG. 39 is an enlarged cross-sectional view taken through lines 39-39 of FIG. 38 illustrating the seat tube clamp in the clamped state.
FIG. 40 is an enlarged cross-sectional view similar to FIG. 39, but showing the clamp in the preclamped state.
FIG. 41 is an enlarged cross-sectional view similar to FIG. 39, but showing a variation of the clamp and in the preclamped state.
FIG. 42 is an enlarged cross-sectional view of the clamp as shown in FIG. 41, but in the clamped state.
FIG. 43 is an enlarged cross-sectional view similar to FIG. 39, but showing another variation of the clamp and in the preclamped state.
FIG. 44 is an enlarged cross-sectional view of the clamp as shown in FIG. 43, but in the clamped state.
FIG. 45 is an enlarged cross-sectional view similar to FIG. 39, but showing yet another variation of the clamp and in the preclamped state.
FIG. 46 is an enlarged cross-sectional view of the clamp as shown in FIG. 45, but in the clamped state.

In the accompanying drawings, like numbers refer to like elements throughout. Prime and multiple prime notation are used to indicate similar elements in alternative embodiments.

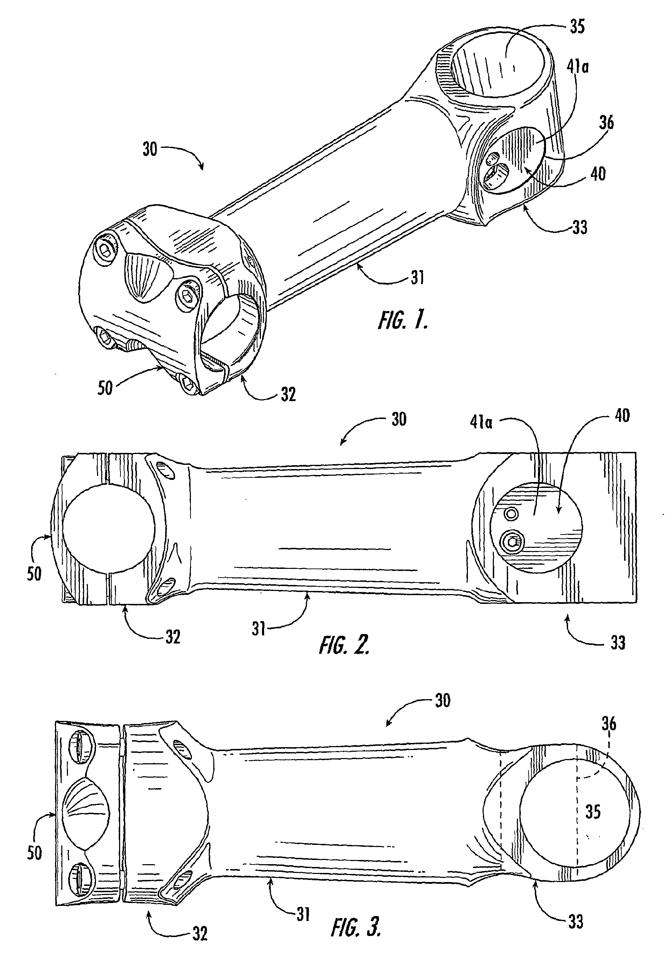

Referring initially to FIGS. 1-3, a first embodiment of the bicycle stem **30** illustratively includes a body portion **31** having opposing first and second ends, a handlebar clamping portion **32** connected to the first end of the body portion, and a steering tube clamping portion **33** connected to the second end of the body portion. A handlebar clamping member **50** is removably secured to the handlebar clamping portion **32** as will be described below in greater detail.

In the illustrated stem **30** the body portion **31** is angled upwardly from the steering tube clamping portion **33.** The stem **30** may be reversed when connected to a bicycle so that the body portion **31** angles downwardly from the steering tube clamping portion **33** as will be appreciated by those skilled in the art. For example, for mountain biking many riders may prefer the upward angle, while road bikers may prefer the downward arrangement.

In the illustrated embodiment, the body portion **31** has a tubular construction for reduced weight with a progressively increasing diameter from the first to the second ends. Of course, in other embodiments, the body portion **31** of the stem **30** could be made shorter or longer, and the body portion **31** could be perpendicular to the steering tube clamping portion **33.** The body portion **31** could also have a constant diameter, or have other shapes, such as a block shape, as will also be appreciated by those skilled in the art.

The steering tube clamping portion **33** illustratively has a tubular shape defining a steering tube receiving passageway **35** therethrough, and a clamp receiving passageway **36** (FIGS. 1 and 3) transverse to the steering tube receiving passageway and in communication therewith. By tubular is meant side walls having an opening or bore therein defining the steering tube receiving passageway **35,** and the side walls need not have a uniform thickness in all contemplated embodiments. In some embodiments, the steering tube clamping portion **33,** could have a rectangular, polygonal or other shape and still be considered as tubular as will be appreciated by those skilled in the art.

The steering tube clamping portion **33** desirably presents a smooth surface free of protrusions in the direction backward toward the rider. As discussed above, such protrusions as are common on many conventional stems may be contacted by a knee of a rider.

The body portion **31,** handlebar clamping portion **32** and steering tube clamping portion **33** of the stem **30** may be integrally formed as a monolithic unit in some embodiments, thereby also increasing strength especially relative to welded stems. The material may be a metal, such as aluminum, magnesium, steel, or alloys thereof, or the material may be a plastic or composite material, such as carbon fiber, as will be appreciated by those skilled in the art.

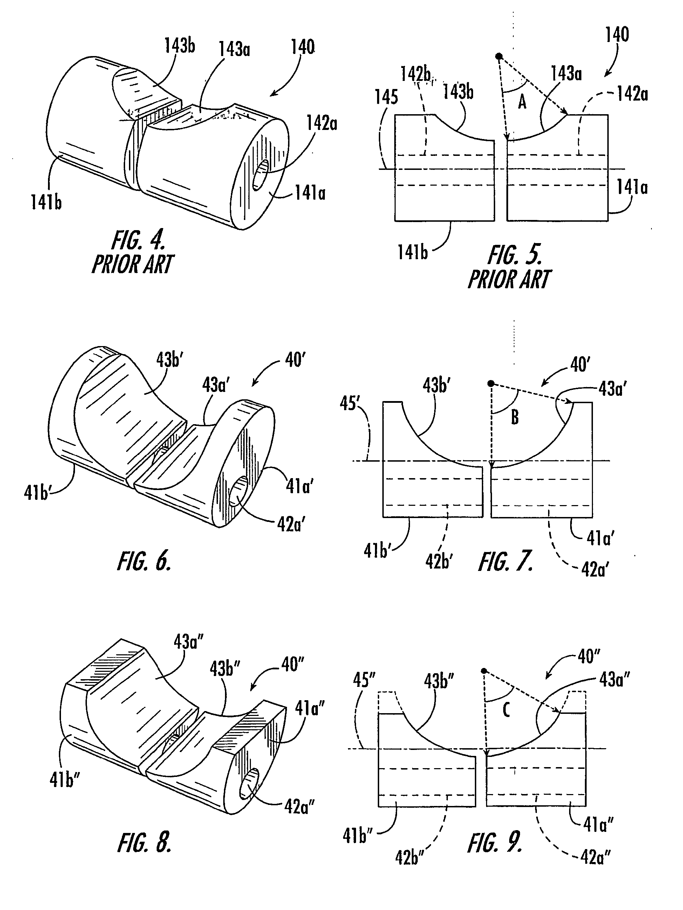

Referring now additionally to FIGS. 4-12, embodiments and aspects of the steering tube clamp **40** are now described. A prior art steering tube clamp **140** is shown in FIGS. 4 and 5 and includes a pair of cooperating clamp members **141a, 141b** aligned in side-by-side relation. The prior art steering tube clamp **140** also includes respective portions defining an imaginary cylinder, and a recess, defined by respective recesses **143a, 143b,** for the steering tube. Each clamp member **141a, 141b** also has a fastener receiving passageway **142a, 142b** therein to receive a single fastener, such as a bolt. The fastener receiving passageways **142a, 142b** are aligned along the axis **145** defined by the imaginary cylinder.

This prior art arrangement of the fastener receiving passageways **142a, 142b** along the axis **145** results in a relatively shallow recess provided by the combination of recesses **143a, 143b.** For example, this shallow arrangement may provide contact of one recess **143a** of less than about 40 degrees for the angle **A** as shown in FIG. 5. The total clamp contact onto the steering tube is then less than about 80 degrees. This may result in a weak connection to the steering tube and/or damage to the steering tube, for example.

As shown in FIGS. 6-12, the stem **30** in some embodiments advantageously includes a steering tube clamp 40, **40' 40"** with cooperating clamp members **41a, 41b; 41a', 41b'; 41a", 41b"** aligned in side-by-side relation and comprising respective portions defining an imaginary cylinder and a recess therein for the steering tube. The recesses are defined by the individual recesses **43a, 43b; 43a', 43b'; 43a", 43b"** as will be appreciated by those skilled in the art. Moreover, each clamp member **41a, 41b; 41a', 41b'; 41a", 41b"** also has at least one fastener receiving passageway therein, **42a, 42b, 42c, 42d; 43a', 43b'; 43a", 43b"** offset a predetermined distance from an axis **45, 45', 45"** defined by the imaginary cylinder.

The arrangement of the offset is also illustratively in the direction away from the recess for the steering tube. This configuration provides for a greater area and/or angle of contact between the steering tube clamp **40, 40', 40"** and the steering tube.

The offset may range from several millimeters to 10 or more millimeters depending on the size of the steering tube and other considerations as will be appreciated by those skilled in the art. The offset permits the angle of contact provided by a recess of a clamp member to be greater than about 45 degrees in some embodiments, greater than about 60 degrees in other embodiments, and even greater than 90 degrees in other preferred embodiments. In other words, the recesses may be greater than 90, 120 and even 180 degrees. While prior art clamps **140** may have had a tendency to damage or deform the steering tube from proper roundness, the steering tube clamp **40, 40', 40"** in accordance with the invention may actually enhance the roundness of a steering tube that is out of round, such as caused by prior use of a conventional steering tube clamp **140,** or from a tube that is out-of-round from the factory.

Referring now more particularly to FIGS. 6 and 7, the steering tube clamp **40'** includes only a single pair of aligned fastener receiving passageways **42a', 42b'** to receive a single fastener, such as a bolt, not shown. In other words, one of the fastener receiving passageways may be threaded and the other may include a stepped diameter to accommodate the enlarged bolt head as will be appreciated by those skilled in the art. Other types of the fastener are also contemplated.

In this embodiment of the steering tube clamp **40'** the ends of the clamp members **41a', 41b'** may be considered as defining circles. Thus the imaginary cylinder defined by the steering tube clamp members **41a', 41b'** is essentially a circular cylinder defined by the perimeter portions of the ends of the clamp members in the illustrated embodiment. A relatively large contact angle **B** is thus defined by the steering tube clamp members **41a', 41b'.** Other forms of imaginary cylinders are also contemplated, including those having a cross-sectional shape in the form of a rectangle, square, ellipse, and/or polygon, or other shape, as long as such a shape defines an axis from which the fastener receiving passageways are offset.

Referring now more particularly, to the steering tube clamp **40"** shown in FIGS. 8 and 9, another embodiment or variation is explained. In this variation, end portions of the clamp members **41a", 41b"** are each cut or truncated along a plane intersecting the imaginary cylinder as will be readily appreciated by those skilled in the art. In other words, cut-off wing portions are formed at the ends of the clamp members **41a", 41b".** A somewhat smaller contact angle C is provided as compared to the steering tube clamp embodiment **40'** discussed above with reference to FIGS. 6 and 7. However, the available contact angle **C** is still greater than the angle **A** of the prior art steering tube clamp **140.**

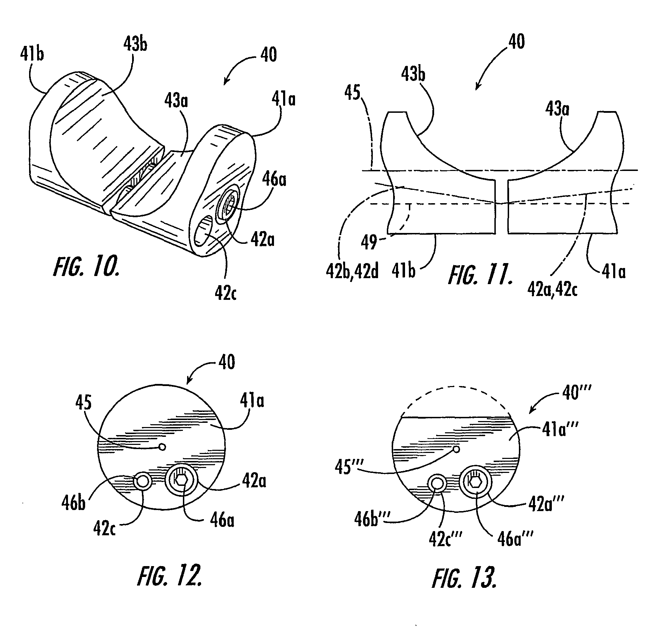

Referring now briefly again to FIGS. 10-12, this embodiment of the steering tube clamp **40** is similar to the embodiment of the steering tube clamp **40'** shown in FIGS. 6 and 7. The steering tube clamp **40** has a profiled shape on the outer end surfaces of each clamp member **41a, 41b** to match the curvature of the adjacent portions of the steering tube clamping portion **33** as perhaps best seen in FIG. 1.

In addition, the steering tube clamp **40** includes two fasteners, in the form of bolts **46a, 46b** (FIG. 10) arranged in opposite directions. Each bolt **46a, 46b** may have an enlarged head and a threaded shaft extending outwardly therefrom. The head may include a recess extending inwardly from an end surface that is keyed, such as to permit turning via an Allen or Torx tool, for example.

In other embodiments, more than two fasteners may be used, and their directions need not be opposing. The dual bolt opposing arrangement does provide some advantages in terms of symmetry, ease of manufacture, and perhaps easier tightening of the fasteners as will be appreciated by those skilled in the art. Of course, using a plurality of fasteners may provide greater holding strength, as well as provide redundancy in the event one of the fasteners fails, becomes loose, or is not properly tightened initially

Referring briefly to FIG. 13, a variation of the steering tube clamp **40'"** is shown in end view, wherein end portions are truncated along a plane parallel to the axis **45"'.** This is similar to the steering tube clamping member **40"** shown in FIGS. 8 and 9. The dual fasteners **46a"', 46b"'** are also similar to the steering tube clamp **40** shown in FIGS. 10-12. Accordingly, the steering tube clamp **40"'** needs no further description herein.

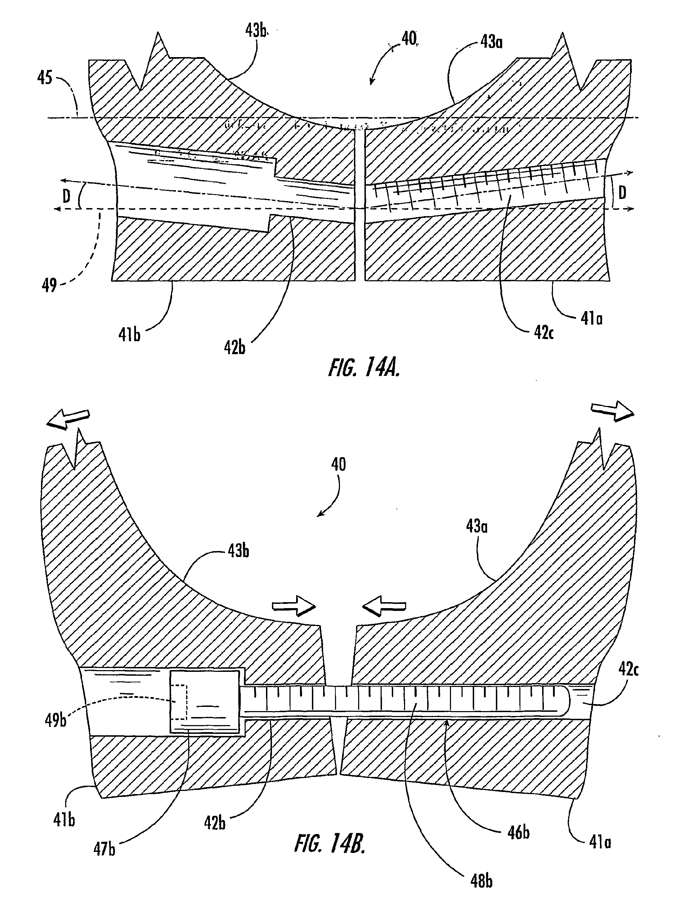

Referring to FIG. 11 and additionally to the enlarged and exaggerated cross-sectional views of FIGS. 14A and 14B, yet another advantageous aspect of the steering tube clamp **40** of the bicycle stem **30** is described. As shown in FIG. 14A, the steering tube clamp **40** illustratively includes a set of fastener receiving passageways **42b, 42c** which are canted at a predetermined angle **D** from parallel to the axis **45** of the imaginary cylinder. The dashed line **49** indicates a parallel line to the axis **45.** In other words, in the position shown in FIG. 14A, the passageways **42b, 42c** define a shallow V-shape.

This canting allows the fasteners to be tightened with less likelihood of binding as outer portions of the clamp members **41a, 41b** engage the steering tube and tend to rotate the outer portions of the clamp members outwardly as the lower portions of the clamp members themselves are being drawn together as shown in FIG. 14B. In the illustrated embodiment, the fastener is in the form of a bolt **46b** having an enlarged head **47b** and a threaded shaft **48b** extending outwardly therefrom. A keyed recess **49b** is provided in the end of the bolt head **47b.**

For example, the predetermined angle **D** may be in a range of about one-half to five degrees and, more preferably about one to three degrees. One and one-half degrees for the canting angle **D** has also been found satisfactory for some embodiments. Although two sets of fastener receiving passageways are shown in the embodiment of the steering tube clamp **40,** this canting concept is applicable to a single set or more than two sets.

The same or equivalent effect to canting the fastener receiving passageways at the predetermined angle **D** may be achieved by changing the outer shape of the clamping members **41a, 41b** to be canted as will be appreciated by those skilled in the art.

As will be readily appreciated by those skilled in the art, a number of the advantageous features may be used independently or in combination. For example, the multiple fasteners may be used with or without the offset. The canting of the angle of the fastener receiving passageways may also be used alone, or in combination with other features. The provision of the recess to extend greater than a predetermined angular amount, can also be used alone or in combination with other features.

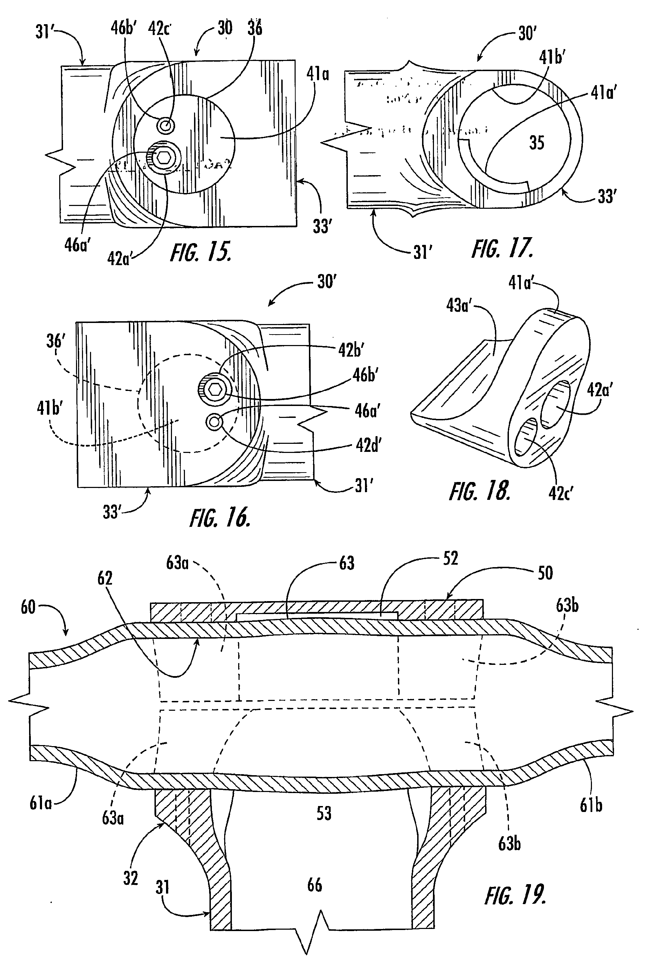

Turning now to FIGS. 15-18, another variation of the bicycle stem **30'** is now described. In this variation, only a single movable clamping member **41a'** is used, and the other mating clamping member is in effect provided by integrally formed opposing wall portions **41b'** of the steering tube clamping portion **33'.** The movable clamp member may be either on the right or lefthand side as will be appreciated by those of skill in the art. Of course, these opposing wall portions **41b'** would also include the fastener receiving passageways **42b', 42d'** as shown in the illustrated embodiment, and as will be appreciated by those skilled in the art.

In this embodiment, the clamping member **41a'** is like the clamping member **41a** used in the steering tube clamp **40** as shown in FIGS. 10-12. In other embodiments, the clamping member could have other configurations as also described herein. Accordingly, the clamping member **41a'** needs no further description, nor do the other elements of the stem **30'** shown in FIGS. 15-18.

Turning now to FIGS. 19 to 25 other advantageous features of the stem **30** are further described, particularly as relating to the handlebar clamping portion **32** and its associated handlebar clamp member **50.** In particular, a conventional handlebar **60** as illustrated includes a pair of nominal diameter tubular portions **61a, 61b** connected together at a central gripping or clamping portion **62.** Moreover, the gripping or clamping portion **62** may be tapered, such as to present an enlarged diameter or slightly larger diameter portion **63** at a medial position thereof. Attempting to clamp uniformly across the entire extent of the tapered or enlarged diameter portion **63** may present difficulties, and strength and/or torsional rigidity of the stem may then be compromised.

The illustrated stem **30** includes the handlebar clamping member **50** which cooperates with the handlebar clamping portion 32 to clamp the bicycle handlebar **60** therebetween. The handlebar clamping member **50** may be secured by one or more removable fasteners so as to be completely removable from the handlebar clamping portion **32** in some embodiments, to thereby facilitate installation of the handlebar **60.**

In some prior art stems, the handlebar clamp is defined by a single slot in a tube that can be slightly opened to receive the handlebar.
Unfortunately, the handlebar must then be carefully and painstakingly threaded through the small opening. In addition, hardware attached to the handlebar may need to be removed from the handlebar. Accordingly, one advantageous feature of the illustrated stem **30** is that the clamping member **50** may be completely removed to facilitate installation of the handlebar.

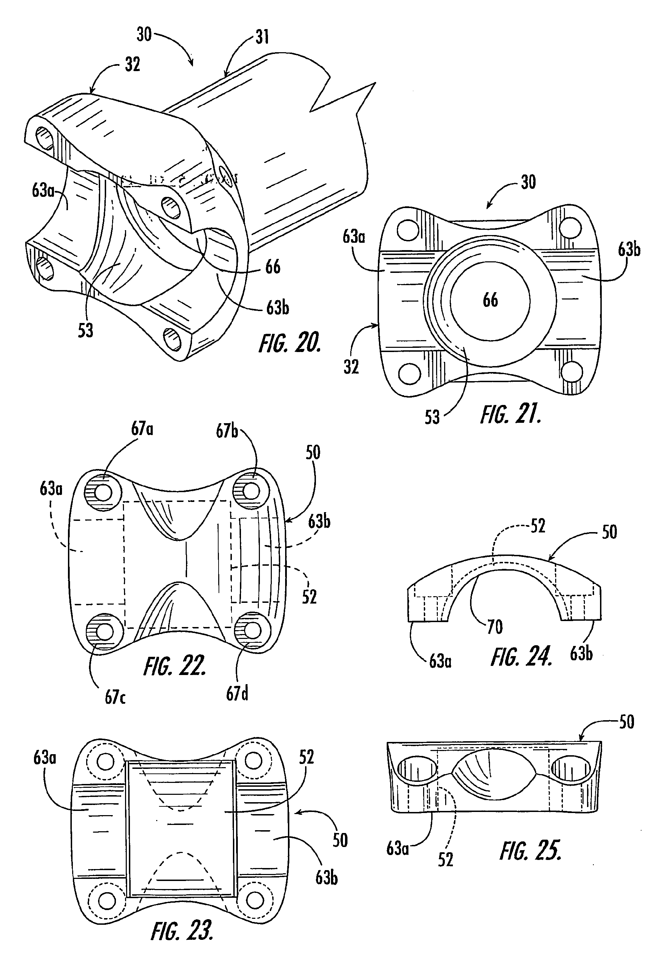

The handlebar clamping member **50** and the handlebar clamping portion **32** have respective cavities **53, 52** in respective medial portions thereof to accommodate the enlarged diameter medial portion **63** of the handlebar **60.** The handlebar clamping member **50** in the illustrated embodiment has a generally rectangular shape with a semi-cylindrical recess **70** (see, e.g. FIG. 24) formed therein for receiving and engaging the handlebar **60.** The semi-cylindrical recess **70** and medial cavity 53 thus define two arcuate contact bands or areas **63a, 63b** for tightly engaging the handlebar **60** at spaced-apart locations. Indeed these spaced-apart contact bands **63a, 63b** illustratively extend to the outer edges of the stem **30.** Similarly, the handlebar clamping portion **32** illustratively includes a semi-cylindrical recess therein, which, in combination with its medial cavity **53,** defines a corresponding pair of arcuate contact bands or areas **63a, 63b** which are also spaced from one another to the edges of the stem **30.** Accordingly, a rigid and strong connection can be made from the stem **30** to the handlebar **60,** such as to reduce torsional rotation during riding, which would otherwise occur to sap the rider's energy.

In the illustrated embodiment, the body portion **31** has a tubular shape with a hollow interior **66.** The cavity **53** of the handlebar clamping portion **32** has an opening therein in communication with the hollow interior **66** of the body portion. Accordingly, weight can be reduced without compromising strength.

The handlebar clamping member **50** and the handlebar clamping portion **32** may both have generally rectangular shapes overlying one another. In these embodiments, respective fasteners **67a-67d** (FIG. 22) secure the corners of the handlebar clamping member **50** and the handlebar clamping portion **32** together. The handlebar clamping portion **32** may include threaded passageways, and the handlebar clamping member **50** may include corresponding passageways, including enlarged portions to receive the bolt heads as shown in the illustrated embodiment. Of course, this configuration of fasteners **67a-67d** could be reversed. Fewer or greater than four fasteners could also be used in other embodiments. In addition, the cavities **53, 52** may be advantageously used in stem configurations, such as the single slot handlebar clamp stem discussed above, and others, as will be appreciated by those skilled in the art.

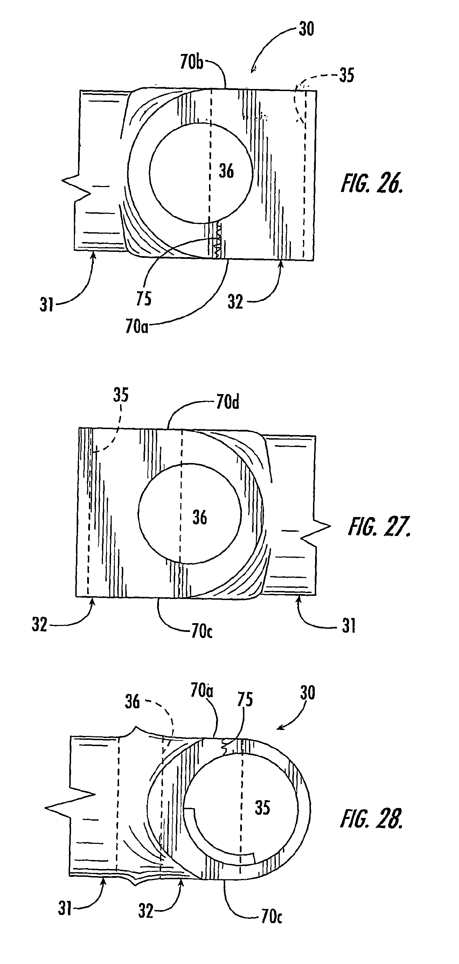

Turning now additionally to FIGS. 26 to 28 another aspect of the stem **30** is now described. In accordance with this aspect, the bicycle stem **30** comprises a body portion **31,** a handlebar clamping portion **32** (FIGS. 1-3) and a steering tube clamping portion **33** having relative strengths so that a predetermined portion, such as a leg **70a** of the steering tube clamping portion **32,** will crack first to thereby provide a visual maintenance indication to a user. As described above the steering tube clamping portion **32** may have a tubular shape defining a steering tube receiving passageway **35** therethrough. The clamp receiving passageway **36** is transverse to the steering tube passageway **35** and in communication therewith. The steering tube clamping portion **32** may thus comprise four legs **70a-70d** defined by the steering tube receiving passageway **35** and the clamp receiving passageway **36.**

The relative strengths may be configured so that one of the legs, typically a lower leg, such as the illustrated lower leg **70a** will form a crack **75** first. Of course, the crack **75** provides a visual indication to the user to repair or replace the stem **30.** The other three legs **70b-70d** are preferably sufficiently strong to maintain a connection to the steering tube even with one of the legs cracked. Thus the likelihood of unexpected complete or catastrophic failure of the stem is significantly reduced.

By forming a crack **75** first is generally intended to mean forming a crack based upon material fatigue, as opposed, for example, to ultimate breaking strength. Fatigue is typically more of a problem as a bicycle is used over and over again with the rider providing alternating rotational loads on the handlebar. For example, an aluminum embodiment of the stem **30** has been tested to withstand upwards of 80,000 load cycles before the first leg will crack. The test included providing alternating loads of ± 42 kg (92 pounds) of force on a test handlebar spanning 457 mm (18 inches) from end-to-end, and with the stem in the middle. It is further noted that the torsional rigidity of the stem 30 is also very high. For example, greater than 136 newton-metres (100 foot-pounds) of torque may be needed for a one degree deflection of the handlebar.

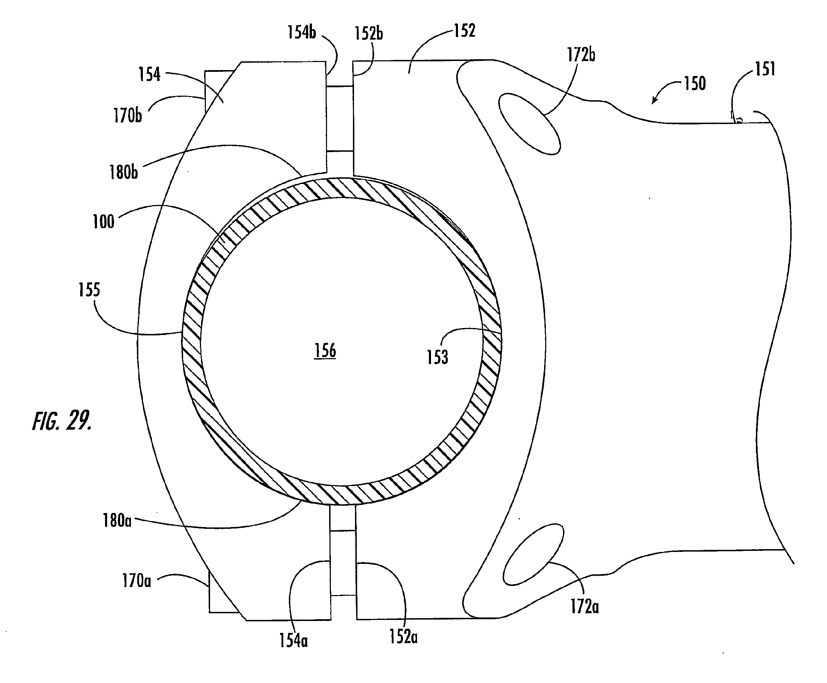

Turning now to FIGS. 29-46 aspects of the invention are now described. In particular, these aspects add ess he difficulty described in the introductory section of deforming the clamping portions and causing biting into and scratching the object, such as a composite handlebar, being clamped to. As the clamping portions are drawn together, they may deform slightly from a nearly perfect circle, and the deformed ends may bite into the handlebar. For metallic handlebars, this may cause only minor cosmetic scratches. For a composite handlebar, even cosmetic scratches may be undesirable as such may at least be perceived as ultimately causing complete failure.

Referring now to initially to FIGS. 29-32, the illustrated bicycle stem **150** includes first and second opposing clamp portions or inner and outer clamp portions **152, 154.** A body portion **151** extends from the inner clamp portion **152.** The first and second clamp portions **152, 154** have respective recesses **153, 155** therein cooperatively defining a generally circular cylindrical opening **156** for receiving an object, such as the illustrated composite tubular handlebar **100** to be clamped to. The first and second opposing clamp portions **152, 154** illustratively have respective ends defining two pairs of opposing ends 152a, 154a and **152b, 154b.** In the illustrated stem 150 the first and second pairs of ends **152a, 154a** and **152b, 154b** are separated by about **180** degrees, although in other embodiments the separation may be different.

The bicycle stem **150** also includes fasteners **170a, 170b** (only two of which of a total of four are shown in the side elevational views) for urging the pairs opposing ends **152a, 154a** and **152b, 154b** towards each other when moved between a preclamped state and a clamped state. In the preclamped state, the clamp portions **152, 154** may be generally relaxed, that is, under no external forces. In the clamped state, wherein the fasteners **170a, 170b** are torqued to the desired value, the clamp portion ends **152a, 154a** and **152b, 154b** may desirably provide about the same clamping pressure as the rest of the clamp portions to thereby prevent digging into the stem **150,** for example. The fasteners can advantageously be provided by threaded bolts, for example, or other types of fasteners. The fasteners **170a, 170b** are received in aligned fastener receiving passageways **172a, 174a** and **172b, 174b.**

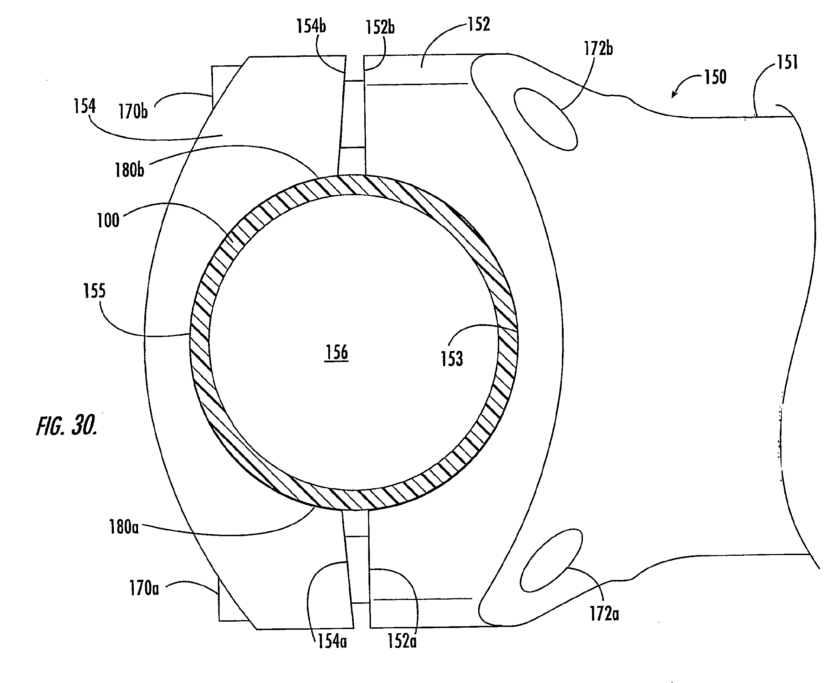

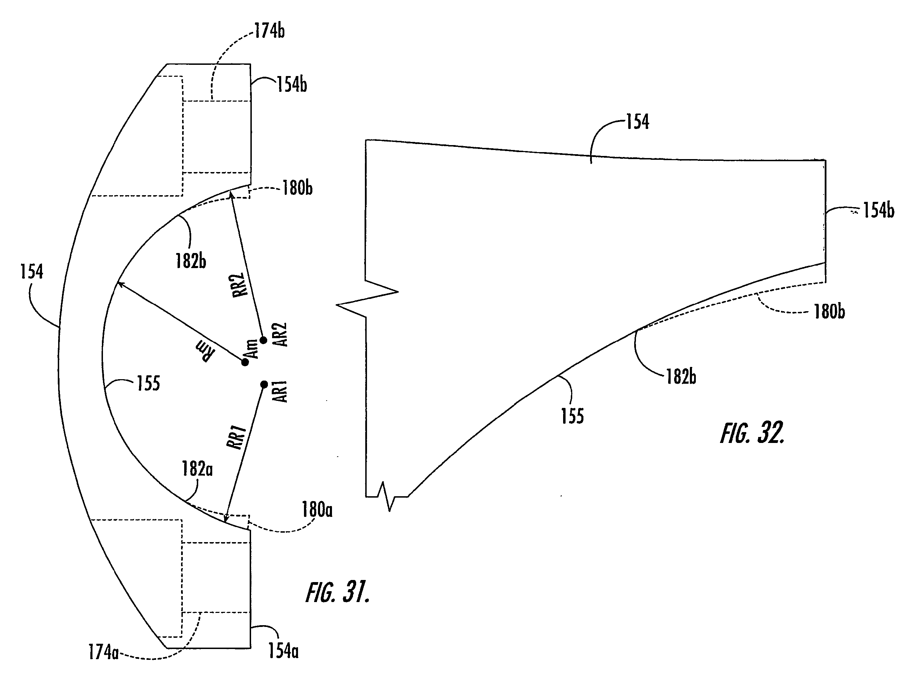

As perhaps best illustrated in FIGS. 31 and 32, the outer clamp portion **154** has a pair of relief areas **180a, 180b** in the recess **155** and extending to the respective ends **154a, 154b** thereof. The bicycle stem **150** is illustrated in FIG. 29 in a preclamped state wherein the relief areas **180a, 180b** of the outer clamp portion **154** are visible. As seen in FIG. 30, the relief areas **180a, 180b** are deflected into engagement with the handlebar **100** when the stem **150** is in the clamped state. As will be readily appreciated by those skilled in the art and as used herein, deflected into engagement does not mean that the entire relief area is necessarily deflected into engagement, as such will depend upon the shape of the relief area, the degree of fastener tightening, and/or the flexibility of the clamp material, for example.

As shown perhaps best in the greatly enlarged view of the relief area **180b** of FIG. 32, the relief area **180b** illustratively defines a discontinuity **182b** with adjacent portions of the recess **155.** The discontinuity may be generally angularly spaced inward from the end **154b** in a range of about 4 to 60 degrees. This advantageously allows the relief area **180b** to be deflected into engagement with the handlebar **100** without biting into the handlebar. The lower relief area **180a** also defines a similar discontinuity **182a.** Those of skill in the art will appreciate that in some embodiments, these discontinuities **182a, 182b** may be so slight as to be almost imperceptible.

Referring now more particularly to FIG. 31, other aspects of the bicycle stem **150** are now described. The generally circular cylindrical opening **156** is defined by a main axis **A_{M}** and a main radius **R_{M}** extending therefrom. The main radius **R_{M}** has a size corresponding to the handlebar **100.** For example, the main radius **R_{M}** may be about 12.7mm (½ inch). The relief areas **180a, 180b** are illustratively defined by respective relief axes **A_{R1}, A_{R2}** and relief radii **R_{R1}, R_{R2}** extending therefrom. The relief axes **A_{R1}, A_{R2}** are also offset from the main axis **A_{M}** by respective offset distances. In the illustrated embodiment, these offset distances are the same for each relief area **180a, 180b.** However, in other embodiments, these distances could be different from one another. In addition, it can be appreciated that the offsets are diagonally arranged from the main axis **A_{M}** in the illustrated embodiment, although other configurations are also contemplated.

It may also be desirable to remove a portion of each end **154a, 154b** of the outer clamp portion **154** which would otherwise define **180** degrees of the opening **156.** For example, about 1.5mm (0.060 inch) may be removed from each of the ends. Accordingly, a slight gap may remain upon tightening of the fasteners **170a, 170b** as shown in the illustrated embodiment.

Forming the relief areas **180a, 180b** based upon offset axes **A_{R1}, A_{R2}** permits conventional boring tools to be used as will be appreciated by those skilled in the art. Of course, other tools may also be used to form the relief areas **180a, 180b,** and, indeed, the relief areas can take other shapes as will be appreciated by those skilled in the art. For example, each relief area **180a, 180b** may be defined by a straight segment, by a parabolic segment, spline segment, or combinations of these types of segments as will also be appreciated by those skilled in the art.

The relief radii **R_{R1}, R_{R2}** and the main radius **R_{M}** are illustratively the same, but can be different in other embodiments. This permits the same boring bar to be used to form the recess **155,** as well as the relief areas **180a, 180b.** This can be done by slight repositioning before forming each radius. As will be appreciated by those skilled in the art, in other embodiments the relief radii can be less than the main radius.

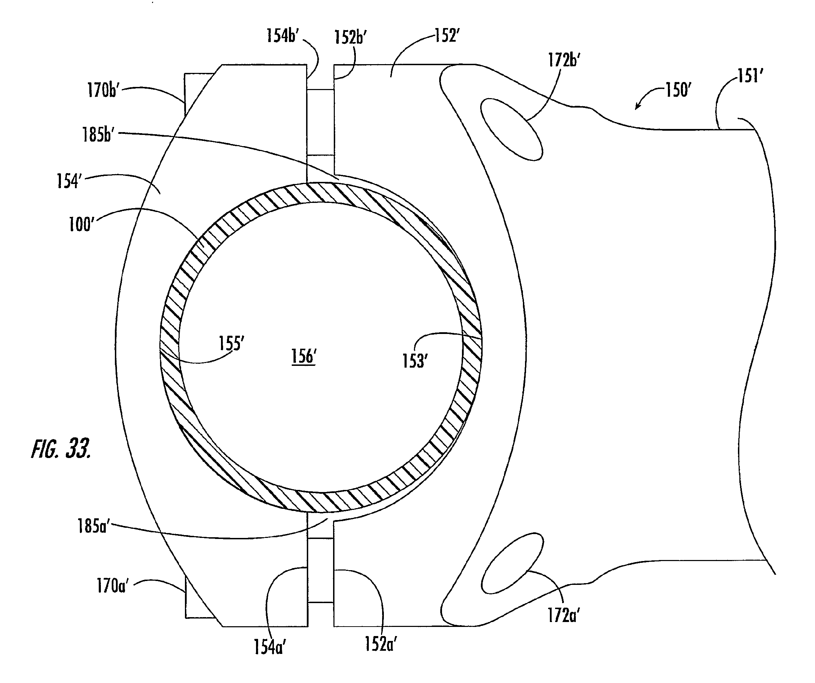

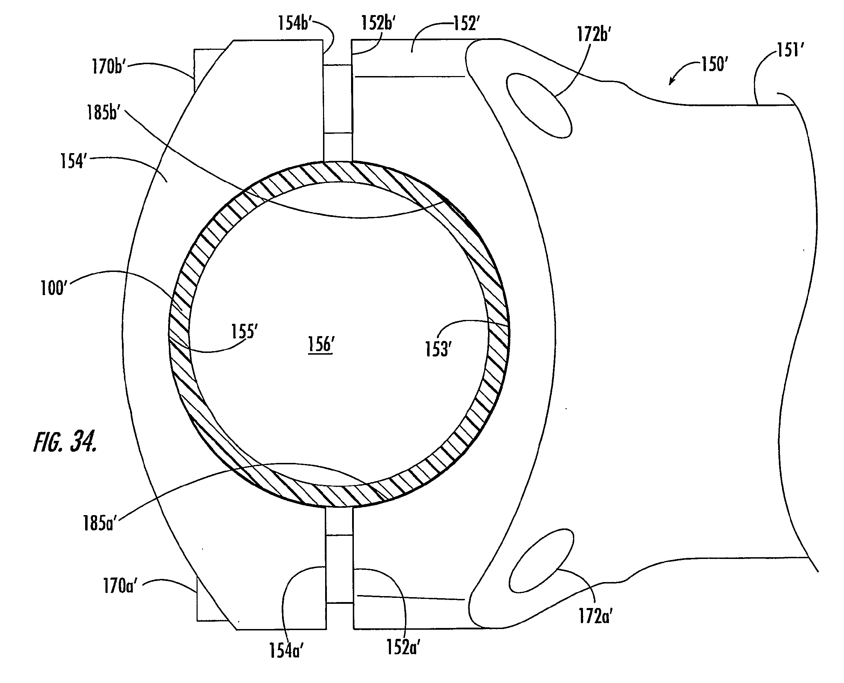

Turning now additionally to FIGS. 33 and 34, another variation of the bicycle stem **150'** is now described. The illustrated bicycle stem **150'** includes relief areas **185a', 185b'** on the inside clamp portion **152'** rather than the outside clamp portion **154'** as described above for the embodiments shown in FIGS. 29-32. The preclamped state for the bicycle stem **150'** is shown in FIG. 33, and the clamped state is shown in FIG. 34.

Those of skill in the art will recognize that in yet other embodiments of the invention, the relief areas could be provided on both clamp portions. Typically the relief areas are provided on the clamp portion or portions which is/are subject to slight deformation as the fasteners are tightened and the clamp is moved to the clamped position. Indeed, in some embodiments, only a single relief area may be needed. The other elements of the bicycle stem **150'** are indicated with prime notation and are similar to those described above with reference to FIGS. 29-32 as will be readily appreciated by those skilled in the art. These similar elements need no further discussion herein.

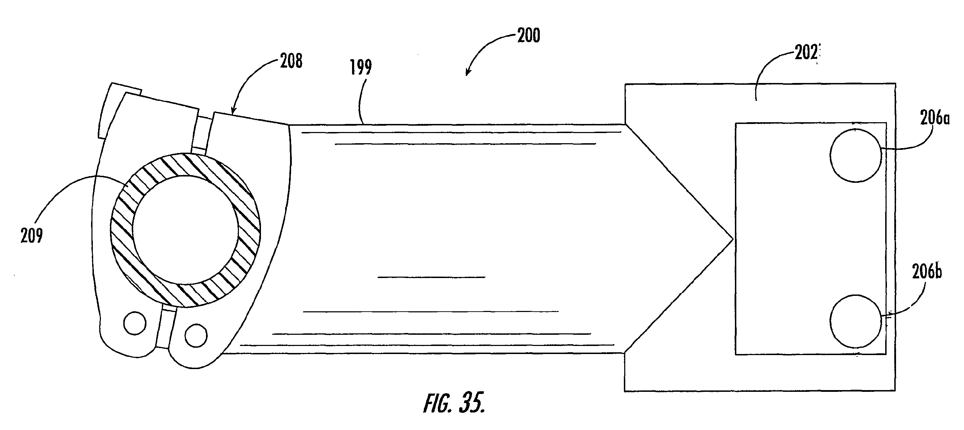

Turning now additionally to FIGS. 35-37, another embodiment of a bicycle stem **200** is now disclosed. In this embodiment, the object to be clamped to is the bicycle steering tube **201.** The clamp portions **202, 204** include ends which define a single pair of opposing ends **203, 205.** A body portion **199** extends from the clamp portions **202, 204** towards the handlebar clamping portion **208** at the opposite end of the body and for clamping to the handlebar **209.**

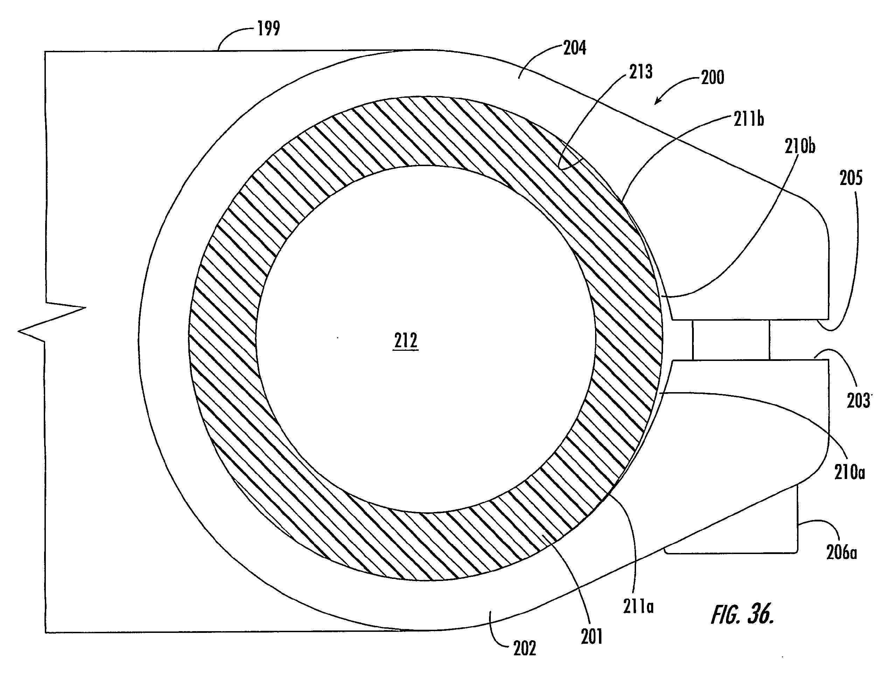

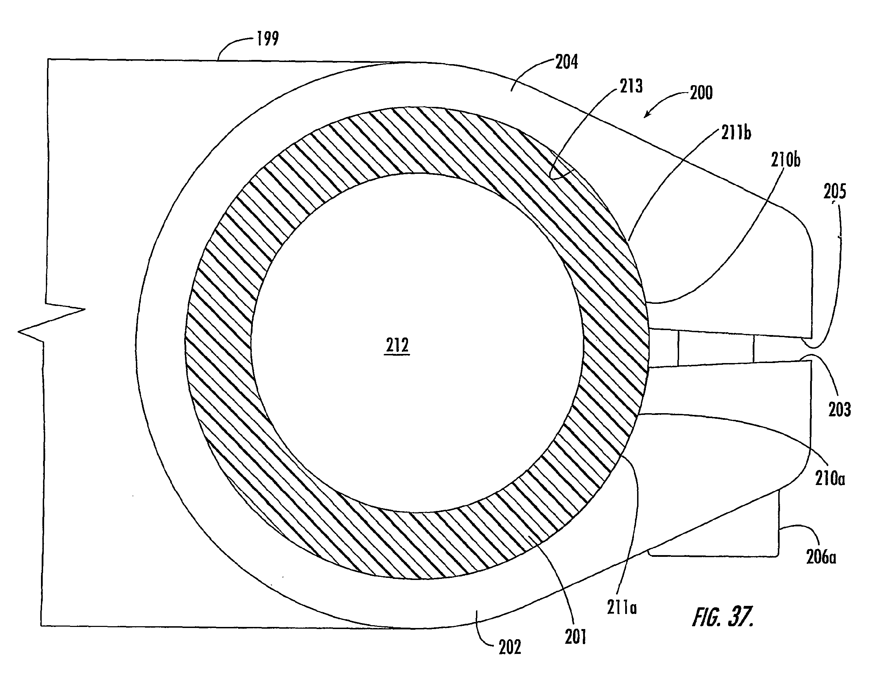

The pair of opposing ends **203, 205** is urged together upon tightening of the fasteners **206a, 206b** as will be readily appreciated by those skilled in the art. The clamp portions **202, 204** also have a recess **213** which defines a generally cylindrical opening **212** to receive the steering tube **201.** The recess **213** includes relief areas **210a,** 210b as seen in the preclamped state of FIG. 36. These relief areas **210a, 210b** also extend to the respective ends **203, 205** and are deflected into engagement with the steering tube **201** when in the clamped state as shown in FIG. 37. The relief areas **210a, 210b** may also include respective discontinuities **211a, 211b** along the lines as described above.

In other variations of the stem **200,** the pair of opposing ends **203, 205** can be rotated from the illustrated position, such as to provide more knee clearance to a rider, as will be appreciated by those skilled in the art. In yet other variations, the clamp portions **202, 204** may include a hinge, not shown, at a desired location spaced from the opposing ends to join the clamp portions together as will also be appreciated by those skilled in the art.

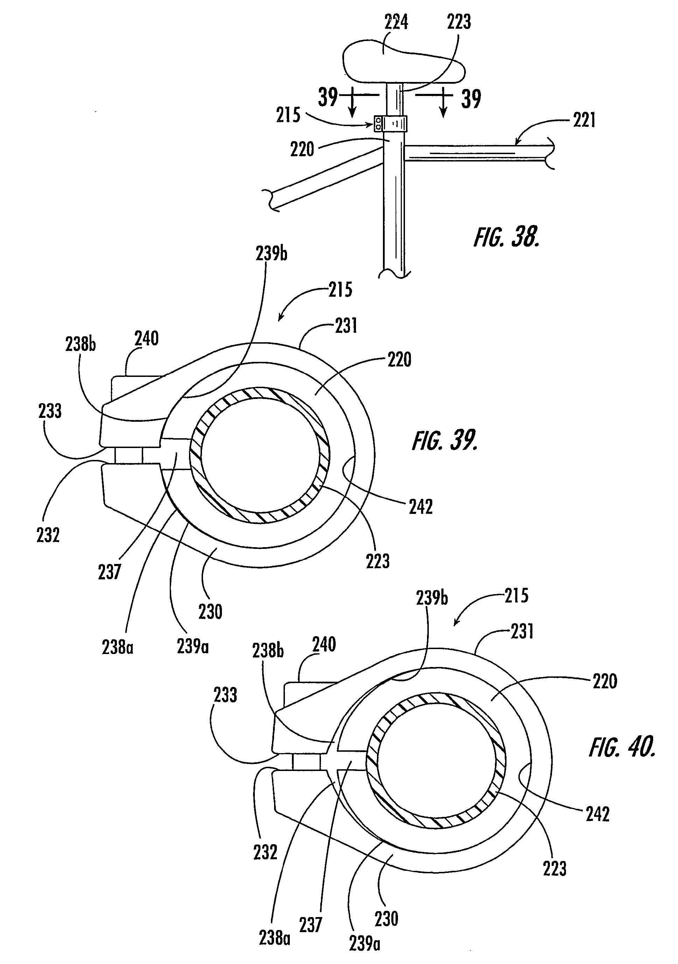

Referring now additionally to FIGS. 38-40 the clamping arrangement described above with reference to FIGS. 35-37 can also be adapted to a seat tube clamp **215** for a seat tube **220** of a bicycle frame **221.** The seat tube **220,** in turn, provides pressure to grip the seat post **223** which carries a bicycle seat **224** as shown in the illustrated embodiment and as will be appreciated by those skilled in the art. The seat tube **220** has a slotted opening **237** in an upper end thereof in the illustrated embodiment. This slotted opening **237** permits constriction of the seat tube **220** to thereby clamp to the seat post **223.**

The seat tube clamp **215** includes first and second clamp portions **230, 231** with respective ends which define a pair of opposing ends **232, 233.** A fastener **240** urges the clamp portions **230, 231** together which causes the relief areas **238a, 238b** of the recess **242** to deflect into engagement with the seat tube **220** as the fastener is tightened. The fastener **240** can be a single threaded fastener or a combination threaded and cam actuated fastener, for example. Discontinuities **239a, 239b** are also formed in the recess **242** which effectively define the start of the respective relief areas **238a, 238b** as will be appreciated by those skilled in the art. These relief areas **238a, 238b** may be formed by any of the techniques as described above. In particular, FIG. 39 shows the clamp **215** in the clamped state and FIG. 40 shows the clamp in the preclamped state.

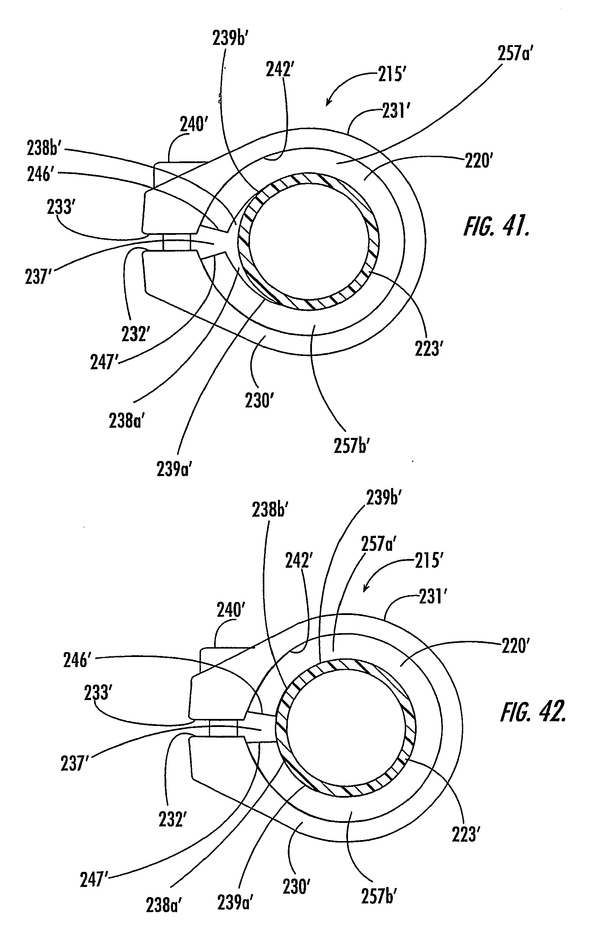

Another variation of the seat tube clamp **215'** is explained with reference to FIGS. 41 and 42, wherein FIG. 41 shows the clamp in the preclamped state and FIG. 42 shows the clamp in the clamped state. As will be apparent to those skilled in the art, in this variation, the seat tube **220'** may be considered as a tubular sleeve having a slotted opening **237'** defining a plurality of sleeve segments **257a', 257b'.** The sleeve segments **257a', 257b'** have respective recesses therein collectively defining the opening for receiving the seat post **223'** to be clamped. The sleeve segments **257a', 257b'** illustratively have respective ends **246', 247'** defining pair of sleeve ends. Of course in other embodiments, more than one slotted opening **237'** could be provided. In this embodiment of the clamp **215'** relief areas **238a', 238b'** are provided in the recesses of the sleeve segments **257a', 257b'.** This embodiment also illustratively has the slotted opening **237'** positioned aligned with the gap defined by the clamp ends **232', 233'**. However, in other embodiments the slotted opening could be offset.

Along the lines as discussed above, as the fastener **240'** is tightened the relief areas **238a', 238b'** are pressed into engagement with the adjacent portions of the seat post **223'** and without digging into the seat post. Of course, this is especially advantageous for composite fiber/resin objects, such as graphite/epoxy resin handlebars, seat posts, handlebars, steering tubes, etc. as will be appreciated by those skilled in the art. Those other elements of the clamp **215'** are similar to those described above and need no further discussion herein.

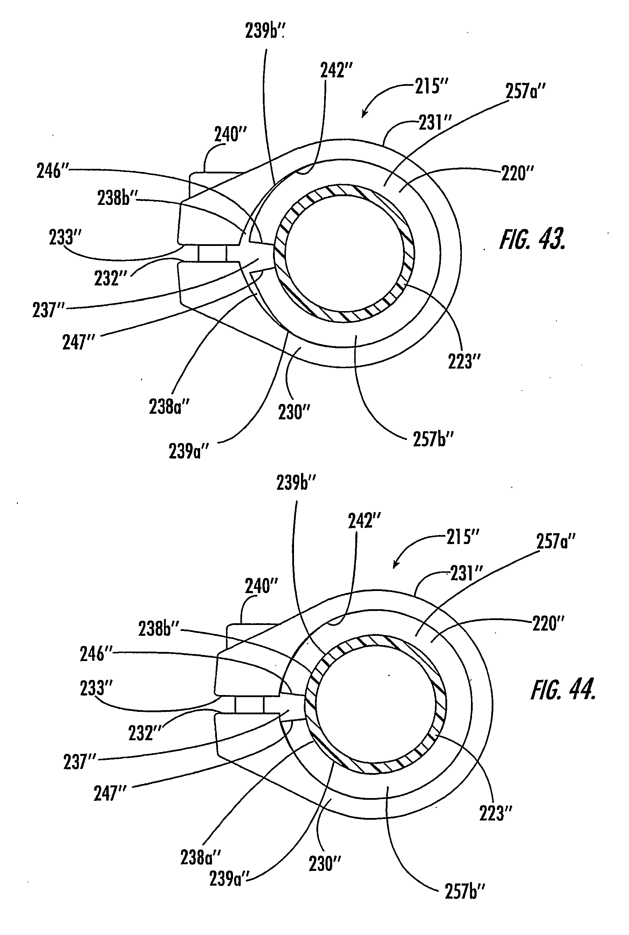

Turning now additionally to FIG. 43 (preclamped state) and FIG. 44 (clamped state), yet another variation of the clamp 215" in accordance with the invention is described. In this variation, relief areas **238a", 238b"** are provided on the outside surface of the seat tube **220".** More particularly, the relief areas **238a", 238b"** are provided adjacent the respective ends **247", 246"** defined by the slotted opening **237".** Those other elements of the clamp **215"** are similar to those described above and need no further discussion herein.

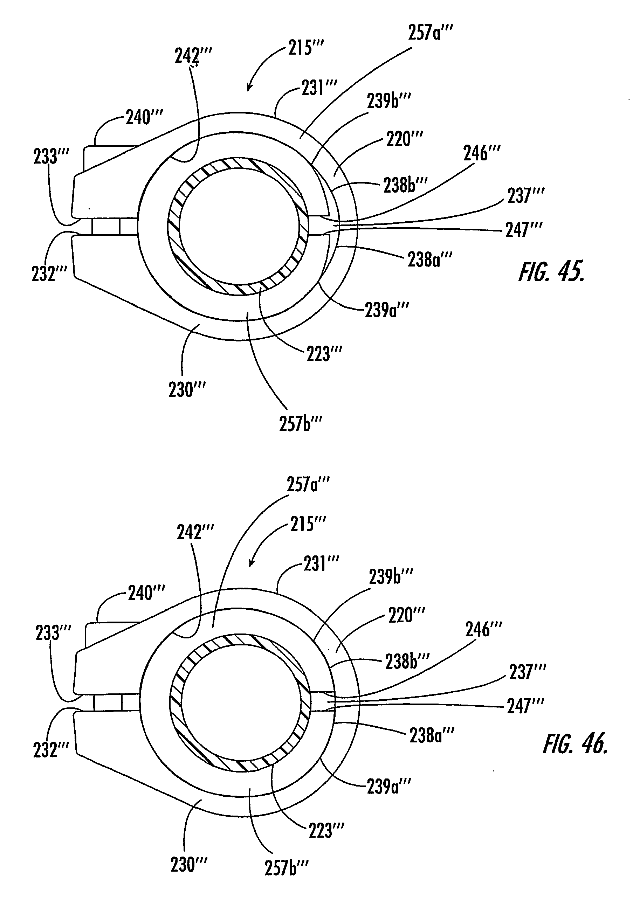

Yet another embodiment of the invention is now described with reference to FIG. 45 (preclamped state) and FIG. 46 (clamped state). In this variation of a clamping arrangement, relief areas **238a"', 238b"'** are provided in an interior portion of the recess **242"'** and spaced from the ends **232"', 233"'** of the clamp portions **230"', 231"',** yet adjacent the pair of ends **246"', 247"'** of the seat tube **220"'.** As will be readily appreciated by those skilled in the art, this configuration also provides similar advantages in terms of reducing the likelihood of digging into the seat post **223"'.** Of course, in yet other embodiments, relief areas can be provided on clamp portions **230"', 231"'**.

Another aspect of the invention relates to a method for making the clamps as described above with reference to FIGS. 29-45. The method may include providing a plurality of clamp portions having respective recesses therein collectively defining a generally circular cylindrical opening for receiving an object to be clamped, and with the clamp portions having respective ends defining at least one pair of opposing ends. The method may also include providing at least one fastener for urging the at least one pair of opposing ends toward each other during movement from a preclamped state to a clamped state. Moreover, the method may also include forming at least one relief area in at least one of the recesses to extend to at least one adjacent end in the preclamped state and being deflected into engagement with the object in the clamped state.

Although the invention is directed primarily to clamps for a bicycle stem, and a seat tube clamp, the same or similar concepts are also applicable to connection from one body or device to a tube, rod or bar. For example, the clamp concepts can be readily extended to any such connections where it is desired to clamp to a tube or solid round bar or rod, for example. Accordingly, many modifications and other embodiments of the invention will come to the mind of one skilled in the art.

## Claims

1. An object clamp (150) comprising:
a plurality of clamp portions (152, 154) having respective recesses (153, 155) therein collectively defining a generally circular cylindrical opening (156) for receiving an object (100) to be clamped, said clamp portions (152, 154) having respective ends defining at least one pair (152a, 154a; 152b, 154b) of opposing ends; and
at least one fastener (170a, 170b) for urging the at least one pair (152a, 152b; 154a, 154b) of opposing ends toward each other during movement from a preclamped state to a clamped state;
said generally circular cylindrical opening (156) being defined by a main axis (Aₘ) and a main radius (Rₘ) extending therefrom in the preclamped state; **characterised in that**
at least one of the recesses (153,155) has at least one relief area (180a, 180b) therein opening outwardly to at least one adjacent end (152a, 152b, 154a, 154b) in the preclamped state and being deflectable into engagement with the object (100) in the clamped state;
the at least one relief area (180a,180b) is defined by at least one relief axis (AR1, AR2) and at least one relief radius (RR1, RR2) extending therefrom with the at least one relief axis (AR1, AR2) being offset from the main axis (Aₘ) in the preclamped state; and
the or each relief area (180a, 180b) defines a discontinuity with adjacent portions of a respective recess (153, 155) in the preclamped state; the discontinuity being angularly spaced inwardly from the adjacent end (152a, 152b, 154a,154b) in a range of about 4 to 60 degrees.

2. An object clamp (150) according to claim 1 wherein the at least one relief radius (RR1, RR2) is less than or equal to the main radius (Rₘ).

3. An object clamp (150) according to claim 1 or 2 including a body portion (151) connected to at least one of said clamp portions (152) and extending outwardly therefrom.

4. A method for making an object clamp (150) for connecting to an object (100), the method comprising:
providing a plurality of clamp portions (152, 154) having respective recesses (153, 155) therein collectively defining a generally circular cylindrical opening (156) for receiving the object (100) to be clamped, the clamp portions (152, 154) having respective ends defining at least one pair (152a, 154a; 152b, 154b) of opposing ends; and
providing at least one fastener (170a, 170b) for urging the at least one pair of opposing ends (152a, 154a; 152b, 154b) toward each other during movement from a preclamped state to a clamped state;
said generally circular cylindrical opening (156) being defined by a main axis (Aₘ) and a main radius (Rₘ) extending therefrom in the preclamped state; **characterised by**
forming at least one relief area (180a, 180b) in at least one of the recesses (153, 155) to often outwardly to at least one adjacent end in the preclamped state and being deflectable into engagement with the object (100) in the clamped state;
the at least one relief area (180a,180b) being defined by at least one relief axis (AR1, AR2) and at least one relief radius (RR1, RR2) extending therefrom with the at least one relief axis (AR1, AR2) being offset from the main axis (Aₘ) in the preclamped state; and
forming each relief area (180a, 180b) with a discontinuity (182a, 182b) with adjacent portions of a respective recess (153, 155) in the preclamped state, the discontinuity (182a, 182b) being angularly spaced inwardly from the adjacent end (152a, 152b, 154a, 154b) in a range of about 4 to 60 degrees.

5. A method according to claim 4 wherein the at least one relief radius (RR1, RR2) is less than or equal to the main radius (Rₘ).

6. An object clamp or method according to any preceding claim wherein the at least one pair of clamp ends comprises a single pair of opposing ends (203, 205).

7. An object clamp or method according to any one of claims 1 to 5 wherein the at least one pair of clamp ends comprises first and second pairs (152a, 154a; 152b, 154b) of opposing ends.

8. An object clamp or method according to claim 7 wherein the first and second pairs (152a, 154a; 152b, 154b) of opposing ends are separated by about 180 degrees.

9. An object clamp or method according to any preceding claim wherein the at least one pair (152a, 154a; 152b, 154b) of opposing ends has at least one pair of aligned fastener receiving passageways (172a, 172b, 174a, 174b) therein.

10. An object clamp, or method according to any preceding claim wherein the opening (156,212,242) is adapted to receive a bicycle component (100) as the object to be clamped.

11. An object clamp or method according to claim 10 wherein the opening (212) is adapted to receive a bicycle steering tube (201) as the object to be clamped.

12. An object clamp or method according to claim 10 wherein the opening (156) is adapted to receive a bicycle handlebar (100) as the object to be clamped.

13. An object clamp or method according to claim 11 wherein the opening (242) is adapted to receive a bicycle seat tube (220) as the object to be clamped.

## Patentansprüche

1. Klemmschelle (150), umfassend:
eine Vielzahl von Schellenteilen (152, 154), die entsprechende Ausnehmungen (153, 155) in sich aufweisen, die zusammen eine allgemein kreisrunde zylindrische Öffnung (156) definieren, um einen einzuspannenden Gegenstand (100) aufzunehmen, wobei die Schellenteile (152, 154) entsprechende Enden aufweisen, die mindestens ein Paar (152a, 154a; 152b, 154b) gegenüberliegender Enden definieren; und
mindestens ein Festziehelement (170a, 170b) zum Drücken des mindestens einen Paars (152a, 152b; 154a, 154b) gegenüberliegender Enden zueinander während einer Bewegung von einem entspannten Zustand in einen gespannten Zustand;
wobei die allgemein kreisrunde zylindrische Öffnung (156) durch eine Hauptachse (Aₘ) und einen Hauptradius (Rₘ) definiert ist, der sich in einem entspannten Zustand von jener aus erstreckt; **dadurch gekennzeichnet, dass**
mindestens eine der Ausnehmungen (153, 155) in sich mindestens einen Freibereich (180a, 180b) hat, der sich im entspannten Zustand zu mindestens einem anschließenden Ende (152a, 152b, 154a, 154b) hin nach außen öffnet und im gespannten Zustand in Eingriff mit dem Gegenstand (100) biegbar ist;
wobei der mindestens eine Freibereich (180a, 180b) durch mindestens eine Freiachse (AR1, AR2) und mindestens einen Freiradius (RR1, RR2) definiert ist, der sich von jener aus erstreckt, wobei die mindestens eine Freiachse (AR1, AR2) im entspannten Zustand gegenüber der Hauptachse (Aₘ) versetzt ist; und
im entspannten Zustand der oder jeder Freibereich (180a, 180b) mit anschließenden Teilen einer entsprechenden Ausnehmung (153, 155) eine Unstetigkeit definiert; wobei die Unstetigkeit vom anschließenden Ende (152a, 152b, 154a, 154b) in einem Bereich von ungefähr 4 bis 60 Grad nach innen winkelversetzt ist.

2. Klemmschelle (150) nach Anspruch 1, wobei der mindestens eine Freiradius (RR1, RR2) kleiner oder gleich dem Hauptradius (Rₘ) ist.

3. Klemmschelle (150) nach Anspruch 1 oder 2, die einen Körperteil (151) aufweist, der mit mindestens einem der Schellenteile (152) verbunden ist und sich von diesem nach außen erstreckt.

4. Verfahren zum Herstellen einer Klemmschelle (150) zum Herstellen einer Verbindung zu einem Gegenstand (100), wobei das Verfahren umfasst:
Vorsehen einer Vielzahl von Schellenteilen (152, 154), die entsprechende Ausnehmungen (153, 155) in sich aufweisen, die zusammen eine allgemein kreisrunde zylindrische Öffnung (156) definieren, um einen einzuspannenden Gegenstand (100) aufzunehmen, wobei die Schellenteile (152, 154) entsprechende Enden aufweisen, die mindestens ein Paar (152a, 154a; 152b, 154b) gegenüberliegender Enden definieren; und
Vorsehen mindestens eines Festziehelements (170a, 170b) zum Drücken des mindestens einen Paars (152a, 154a; 152b, 154b) gegenüberliegender Enden zueinander während einer Bewegung von einem entspannten Zustand in einen gespannten Zustand;
wobei die allgemein kreisrunde zylindrische Öffnung (156) durch eine Hauptachse (Aₘ) und einen Hauptradius (Rₘ) definiert ist, der sich in dem entspannten Zustand von jener aus erstreckt; **gekennzeichnet durch**
Ausbilden mindestens eines Freibereichs (180a, 180b) in mindestens einer der Ausnehmungen (153, 155), der sich im entspannten Zustand zu mindestens einem anschließenden Ende hin nach außen öffnet und im gespannten Zustand in Eingriff mit dem Gegenstand (100) biegbar ist;
wobei der mindestens eine Freibereich (180a, 180b) **durch** mindestens eine Freiachse (AR1, AR2) und mindestens einen Freiradius (RR1, RR2) definiert ist, der sich von jener aus erstreckt, wobei die mindestens eine Freiachse (AR1, AR2) im entspannten Zustand gegenüber der Hauptachse (Aₘ) versetzt ist; und
Ausbilden jedes Freibereichs (180a, 180b) mit einer Unstetigkeit mit anschließenden Teilen einer entsprechenden Ausnehmung (153, 155) im entspannten Zustand, wobei die Unstetigkeit (182a, 182b) vom anschließenden Ende (152a, 152b, 154a, 154b) in einem Bereich von ungefähr 4 bis 60 Grad nach innen winkelversetzt ist.

5. Verfahren nach Anspruch 4, wobei der mindestens eine Freiradius (RR1, RR2) kleiner oder gleich dem Hauptradius (Rₘ) ist.

6. Klemmschelle oder Verfahren nach einem der vorhergehenden Ansprüche, wobei das mindestens eine Paar Schellenenden ein einziges Paar gegenüberliegender Enden (203, 205) umfasst.

7. Klemmschelle oder Verfahren nach einem der Ansprüche 1 bis 5, wobei das mindestens eine Paar Schellenenden ein erstes und ein zweites Paar (152a, 154a; 152b, 154b) gegenüberliegender Enden umfasst.

8. Klemmschelle oder Verfahren nach Anspruch 7, wobei das erste und das zweite Paar (152a, 154a; 152b, 154b) gegenüberliegender Enden um ungefähr 180 Grad voneinander getrennt sind.

9. Klemmschelle oder Verfahren nach einem der vorhergehenden Ansprüche, wobei das mindestens eine Paar (152a, 154a; 152b, 154b) gegenüberliegender Enden in sich mindestens ein Paar aufeinander ausgerichteter Festziehelement-Aufnahmedurchgänge (172a, 172b, 174a, 174b) aufweist.

10. Klemmschelle oder Verfahren nach einem der vorhergehenden Ansprüche, wobei die Öffnung (156, 212, 242) dazu ausgelegt ist, als den einzuspannenden Gegenstand eine Fahrradkomponente (100) aufzunehmen.

11. Klemmschelle oder Verfahren nach Anspruch 10, wobei die Öffnung (212) dazu ausgelegt ist, als den einzuspannenden Gegenstand ein Fahrradlenkrohr (201) aufzunehmen.

12. Klemmschelle oder Verfahren nach Anspruch 10, wobei die Öffnung (156) dazu ausgelegt ist, als den einzuspannenden Gegenstand eine Fahrradlenkstange (100) aufzunehmen.

13. Klemmschelle oder Verfahren nach Anspruch 11, wobei die Öffnung (242) dazu ausgelegt ist, als den einzuspannenden Gegenstand ein Fahrradsitzrohr (220) aufzunehmen.

## Revendications

1. Collier de serrage d'objet (150) comprenant :
une pluralité de parties de collier de serrage (152, 154) ayant des évidements (153, 155) respectifs à l'intérieur de ces dernières, définissant collectivement une ouverture cylindrique généralement circulaire (156) pour recevoir un objet (100) à serrer, lesdites parties de collier de serrage (152, 154) ayant des extrémités respectives définissant au moins une paire (152a, 154a ; 152b, 154b) d'extrémités opposées ; et
au moins une fixation (170a, 170b) pour pousser la au moins une paire (152a, 152b ; 154a, 154b) d'extrémités opposées l'une vers l'autre pendant le mouvement allant d'un état pré-serré jusqu'à un état serré ;
ladite ouverture cylindrique généralement circulaire (156) étant définie par un axe principal (Aₘ) et un rayon principal (Rₘ) s'étendant à partir de cette dernière dans l'état pré-serré ; **caractérisé en ce que** :
au moins l'un des évidements (153, 155) a au moins une zone de dégagement (180a, 180b) à l'intérieur de ce dernier débouchant vers l'extérieur sur au moins une extrémité (152a, 152b, 154a, 154b) adjacente à l'état pré-serré et pouvant être déviée en mise en prise avec l'objet (100) à l'état serré ;
la au moins une zone de dégagement (180a, 180b) est définie par au moins un axe de dégagement (AR1, AR2) et au moins un rayon de dégagement (RR1, RR2) s'étendant à partir de cette dernière avec le au moins un axe de dégagement (AR1, AR2) qui est décalé de l'axe principal (Aₘ) à l'état pré-serré ; et
la ou chaque zone de dégagement (180a, 180b) définit une discontinuité avec les parties adjacentes d'un évidement (153, 155) respectif à l'état pré-serré ; la discontinuité étant angulairement espacée vers l'intérieur à partir de l'extrémité (152a, 152b, 154a, 154b) adjacente de l'ordre d'environ 4 à 60 degrés.

2. Collier de serrage d'objet (150) selon la revendication 1, dans lequel le au moins un rayon de dégagement (RR1, RR2) est inférieur ou égal au rayon principal (Rₘ).

3. Collier de serrage d'objet (150) selon la revendication 1 ou 2, comprenant une partie de corps (151) raccordée à au moins l'une desdites parties de collier de serrage (152) et s'étendant vers l'extérieur à partir de ces dernières.

4. Procédé pour fabriquer un collier de serrage d'objet (150) pour le raccordement à un objet (100), le procédé comprenant les étapes consistant à :
prévoir une pluralité de parties de collier de serrage (152, 154) ayant des évidements (153, 155) respectifs à l'intérieur de ces dernières, définissant collectivement une ouverture cylindrique généralement circulaire (156) pour recevoir l'objet (100) à serrer, les parties de collier de serrage (152, 154) ayant des extrémités respectives définissant au moins une paire (152a, 154a ; 152b, 154b) d'extrémités opposées ; et
prévoir au moins une fixation (170a, 170b) pour pousser la au moins une paire d'extrémités opposées (152a, 154a ; 152b, 154b) l'une vers l'autre pendant le mouvement d'un état pré-serré à un état serré ;
ladite ouverture cylindrique généralement circulaire (156) étant définie par un axe principal (Aₘ) et un rayon principal (Rₘ) s'étendant à partir de cette dernière dans un état pré-serré ;
**caractérisé par** les étapes consistant à :
former au moins une zone de dégagement (180a, 180b) dans au moins l'un des évidements (153, 155) pour déboucher vers l'extérieur sur au moins une extrémité adjacente à l'état pré-serré et pouvant être déviée en mise en prise avec l'objet (100) à l'état serré ;
la au moins une zone de dégagement (180a, 180b) étant définie par au moins un axe de dégagement (AR1, AR2) et au moins un rayon de dégagement (RR1, RR2) s'étendant à partir de cette dernière avec au moins un axe de dégagement (AR1, AR2) qui est décalé par rapport à l'axe principal (Aₘ) à l'état pré-serré ; et
former chaque zone de dégagement (180a, 180b) avec une discontinuité (182a, 182b) avec des parties adjacentes d'un évidement (153, 155) respectif à l'état pré-serré, la discontinuité (182a, 182b) étant angulairement espacée vers l'intérieur à partir de l'extrémité (152a, 152b, 154a, 154b) adjacente dans une plage d'environ 4 à 60 degrés.

5. Procédé selon la revendication 4, dans lequel le au moins un rayon de dégagement (RR1, RR2) est inférieur ou égal au rayon principal (Rₘ).

6. Collier de serrage d'objet ou procédé selon l'une quelconque des revendications précédentes, dans lequel la au moins une paire d'extrémités de collier de serrage comprend une paire unique d'extrémités opposées (203, 205).

7. Collier de serrage d'objet ou procédé selon l'une quelconque des revendications 1 à 5, dans lequel la au moins une paire d'extrémités de collier de serrage comprend des première et deuxième paires (152a, 154a ; 152b, 154b) d'extrémités opposées.

8. Collier de serrage d'objet ou procédé selon la revendication 7, dans lequel les première et deuxième paires (152a, 154a ; 152b, 154b) d'extrémités opposées sont séparées par environ 180 degrés.

9. Collier de serrage d'objet ou procédé selon l'une quelconque des revendications précédentes, dans lequel la au moins une paire (152a, 154a ; 152b, 154b) d'extrémités opposées a au moins une paire de voies de passage de réception de fixation alignées (172a, 172b, 174a, 174b) à l'intérieur de ces dernières.

10. Collier de serrage d'objet ou procédé selon l'une quelconque des revendications précédentes, dans lequel l'ouverture (156, 212, 242) est adaptée pour recevoir un composant de bicyclette (100) en tant qu'objet à serrer.

11. Collier de serrage d'objet ou procédé selon la revendication 10, dans lequel l'ouverture (212) est adaptée pour recevoir un tube de direction (201) de bicyclette en tant qu'objet à serrer.

12. Collier de serrage d'objet ou procédé selon la revendication 10, dans lequel l'ouverture (156) est adaptée pour recevoir un guidon (100) de bicyclette en tant qu'objet à serrer.

13. Collier de serrage d'objet ou procédé selon la revendication 11, dans lequel l'ouverture (242) est adaptée pour recevoir un tube de siège (220) de bicyclette en tant qu'objet à serrer.
